# EUROPÄISCHE PATENTSCHRIFT

(11) **EP 3 092 359 B1**
(45) Veröffentlichungstag und Bekanntmachung des Hinweises auf die Patenterteilung: **26.12.2018**
(21) Anmeldenummer: 15701304.6
(22) Anmeldetag: 09.01.2015
(51) Int. Cl.: E05B 29/00

(54) **ZYLINDERSCHLOSS**
CYLINDER LOCK
SERRURE À CYLINDRE

(30) Priorität: 09.01.2014 AT 132014
(43) Veröffentlichungstag der Anmeldung: 16.11.2016
(73) Patentinhaber: Prunbauer, Kurt, 3130 Herzogenburg (AT)
(72) Erfinder: PRUNBAUER, Michael, A-3130 Herzogenburg (AT)
(74) Vertreter: Puchberger & Partner Patentanwälte
(86) Internationale Anmeldenummer: PCT/EP2015/050287
(87) Internationale Veröffentlichungsnummer: WO 2015/104351

(56) Entgegenhaltungen:
- EP-A2- 1 288 402
- CH-A- 249 824
- FR-A1- 2 491 117
- GB-A- 2 107 380

## Beschreibung

Die Erfindung betrifft ein Zylinderschloss mit einem Zylindergehäuse und einem darin drehbaren, einen Schlüsselkanal aufweisenden Zylinderkern, wobei im Zylinderkern Schlitze vorgesehen sind, in denen Schließplättchen verschiebbar angeordnet sind, die jeweils mit einer Spiralfeder vorgespannt sind, wobei die Schließplättchen an ihrem äußeren Umfang jeweils wenigstens einen Vorsprung aufweisen, der mit wenigstens einer Ausnehmung im Zylindergehäuse zusammenwirkt, um den Zylinderkern gegen eine Drehbewegung relativ zum Zylindergehäuse zu blockieren.

Aus dem Stand der Technik sind derartige Zylinderschlösser mit Schließplättchen bekannt, wobei die Schließplättchen Codierungen aufweisen, die mit entsprechenden Abtastpositionen am Schlüssel zusammenwirken um die Schließplättchen aus einer Blockierstellung in eine Freigabestellung zu verschieben.

So zeigt die EP 1 980 694 A2 ein Plättchenzylinderschloss, wobei im Zylinderkern mehrere Schließplättchen verschiebbar angeordnet sind, die in einer Blockierstellung in zugeordnete Ausnehmungen im Zylindergehäuse eingreifen.

Weitere gattungsgemäße Plättchenzylinderschlösser sind aus den Druckschriften FR 2 491 117 A1, GB 2 107 380 A, EP 1 288 402 A2 sowie CH 249 824 A bekannt.

Die Aufgabe der Erfindung besteht darin, diese bekannten Zylinderschlösser weiter zu entwickeln und insbesondere die Anzahl der möglichen Codierungen zu erhöhen und die Erstellung von Hierarchien zu ermöglichen.

Dies wird erfindungsgemäß durch ein Zylinderschloss mit den Merkmalen des Anspruchs 1 erreicht.

Um die Anzahl an Variationsmöglichkeiten weiter zu erhöhen, sind unterschiedliche Arten von Schließplättchen vorgesehen. Es sind erfindungsgemäß positive Schließplättchen vorgesehen, die in vorgespannter Stellung im Schlitz den Zylinderkern blockieren, und bei Verschiebung den Zylinderkern freigeben, sowie negative Schließplättchen, die in vorgespannter Stellung im Schlitz den Zylinderkern freigeben und bei Verschiebung durch einen nicht berechtigten Schlüssel den Zylinderkern blockieren.

Durch das Vorsehen von sowohl Abtastnuten als auch Abtastnocken an einer der beiden inneren Seitenkanten kann eine entsprechende Codierung an den Seitenflächen des Flachschlüssels abgefragt werden. Alle an Rasterpositionen eines Schließplättchens angeordneten Abtastnocken und Abtastnuten fragen gleichzeitig eine Abtastposition des Schlüssels ab. Dadurch wird ermöglicht, für jedes Schließplättchen eine Hierarchie in Form von Haupt- und Gruppenschlüsseln zu schaffen, indem beispielsweise bestimmte Schlüsselgruppen Codierungen nur an bestimmten Rasterposition aufweisen.

Indem im Zylinderkern mehrere Schlitze vorgesehen sind, wobei in jedem Schlitz zumindest ein Schließplättchen vorgesehen ist, kann die Anzahl der möglichen Codierungen gegenüber herkömmlichen Schlössern wesentlich erhöht werden. An jeder Abtastposition des verwendeten Schlüssels wird zumindest eine Codierung von zumindest einem im Schlitz gelagerten Schließplättchen abgefragt.

Die Ausnehmung der Schließplättchen kann in Form einer rechteckigen Öffnung zur Aufnahme des Schlüssels, oder vorzugsweise in Form einer U-förmigen Ausnehmung zur Aufnahme des Schlüssels ausgeführt sein.

Besonders vorteilhaft ist es, wenn in jedem Schlitz zumindest zwei unabhängig voneinander gefederte Schließplättchen angeordnet sind. Dadurch wird erreicht, dass jede Abtastposition an der Seitenfläche des Schlüssels durch zwei Schließplättchen abgefragt wird, die in bevorzugter Weise Abtastnocken und Abtastnuten an unterschiedlichen Rasterpositionen haben, und somit an ein und der selben Abtastposition unterschiedliche Codierungen abfragen.

Es können beispielsweise am Schlüssel sieben Codierungen an einer Abtastposition vorgesehen sein, wobei ein erstes Schließplättchen die erste Codierung am Schlüssel abfragt, und ein zweites Schließplättchen an der selben Abtastposition die zweite Codierung am Schlüssel abfragt.

Bevorzugt kann vorgesehen sein, dass entlang des Zylinderkerns mehrere, vorzugsweise sechs Schlitze vorgesehen sind, die mit mehreren, vorzugsweise sechs voneinander unabhängigen Abtastpositionen A - F am Flachschlüssel korrespondieren.

An einer Seitenkante der Schließplättchen können an insbesondere sieben Rasterpositionen Abtastnocken oder Abtastnuten vorgesehen sein, die mit mehreren, vorzugsweise sieben entsprechend angeordneten Codierungen an den Abtastpositionen A - F des Flachschlüssels korrespondieren.

Es können auch neutrale Schließplättchen vorgesehen sein, die an ihrem äußeren Umfang zwei im Wesentlichen gegenüberliegende flache Vorsprünge aufweisen. Das Zylindergehäuse kann für die Aufnahme dieser neutralen Schließplättchen mit zwei gegenüberliegenden Vorsprüngen zwei korrespondierende, im Wesentlichen gegenüberliegende Ausnehmungen zur Blockierung des Zylinderkerns aufweisen. Die Ausnehmungen können in einem Winkel von weniger als 180° gegeneinander versetzt angeordnet sein, um einen Schlüsselabzug bei 180° Drehung des Kerns zu blockieren.

Die neutralen Schließplättchen können in vorgespannter Stellung den Zylinderkern durch Eingriff eines flachen Vorsprungs in eine erste Ausnehmung blockieren, bei Verschiebung um eine erste Distanz den Zylinderkern freigeben, und bei Verschiebung um eine zweite, größere Distanz durch Eingriff eines zweiten Vorsprungs in eine zweite Ausnehmung wieder blockieren.

Besonders vorteilhaft ist es, wenn in jedem Schlitz ein positives und ein negatives Schließplättchen, ein positives und ein neutrales Schließplättchen, oder ein negatives und ein neutrales Schließplättchen vorgesehen sind.

Die Erfindung umfasst weiters ein System aus einem erfindungsgemäßen Zylinderschloss und einem Flachschlüssel mit vorzugsweise sechs Abtastpositionen A - F an seinen Seitenflächen, wobei an den Abtastpositionen zum Eingriff in die Abtastnocken und/oder Abtastnuten der Schließplättchen an vorzugsweise sieben Rasterpositionen des Flachschlüssels Codierungen vorgesehen sind.

Weitere erfindungsgemäße Merkmale ergeben sich aus den Ansprüchen, den Ausführungsbeispielen und den Zeichnungen.

Die Erfindung wird im Folgenden an Hand von Ausführungsbeispielen beschrieben.

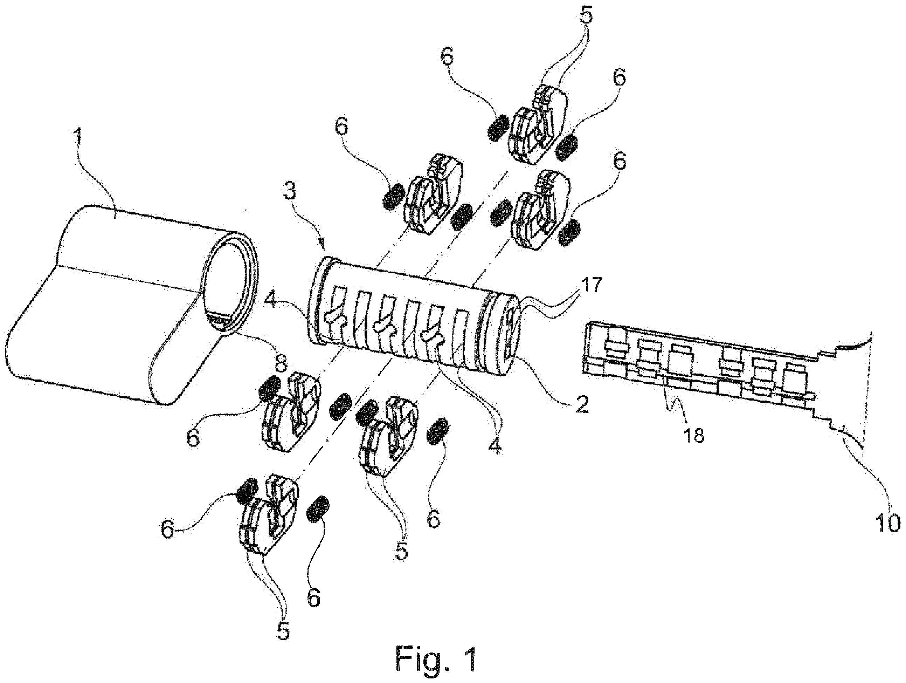

Fig. 1 zeigt eine schematische Darstellung einer Ausführungsform eines erfindungsgemäßen Zylinderschlosses, wobei auf die Darstellung einer Sperrnase aus Gründen der Übersichtlichkeit verzichtet wurde. Das Zylinderschloss umfasst ein Zylindergehäuse 1 mit einer Öffnung, in die ein Zylinderkern 3 einführbar ist. Die Öffnung verfügt an ihrem inneren Umfang über Ausnehmungen 8 zum Blockieren einer Drehung des Zylinderkerns 3 relativ zum Zylindergehäuse. Der Zylinderkern 3 verfügt stirnseitig über eine nicht dargestellte Kupplung, um bei Drehung relativ zum Gehäuse die ebenfalls nicht dargestellte Sperrnase zu bedienen. Im Zylinderkern 3 ist ein Schlüsselkanal 2 angeordnet, in den ein Flachschlüssel 10 eingeführt werden kann. Im Schlüsselkanal 2 sind Steuerrippen 17 angeordnet, die mit Steuernuten 18 am Flachschlüssel 10 korrespondieren, um das korrekte Einführen des Schlüssels zu gewährleisten. Durch Änderung der Lage und Form dieser Steuerrippen können in nicht dargestellten Ausführungsformen der Erfindung weitere Variationen geschaffen werden.

Der Zylinderkern 3 verfügt über sechs in radialer Richtung angeordnete Schlitze 4, wobei in jedem Schlitz 4 jeweils zwei Schließplättchen 5 angeordnet sind. Die Schließplättchen 5 verfügen über eine Nut, in der eine Spiralfeder 6 angeordnet ist. Die Spiralfeder 6 greift einerseits an der Nut des Schließplättchens, und andererseits an einer Nut im Zylinderkern im Inneren des Schlitzes 4 an, um die Schließplättchen in einen vorgespannten Zustand zu versetzen. Die Schließplättchen 5 haben Vorsprünge 7, die mit den Ausnehmungen 8 zusammenwirken, um eine Drehung des Zylinderkerns durch einen unberechtigten Schlüssel zu blockieren. Durch Einführen eines berechtigten Flachschlüssels 10 in den Schlüsselkanal 2 werden die Schließplättchen 5 in Abhängigkeit von Fräsungen an Abtastpositionen des Flachschlüssels 10 gegen die Spannung der Spiralfeder 6 verschoben und der Zylinderkern wird freigegeben.

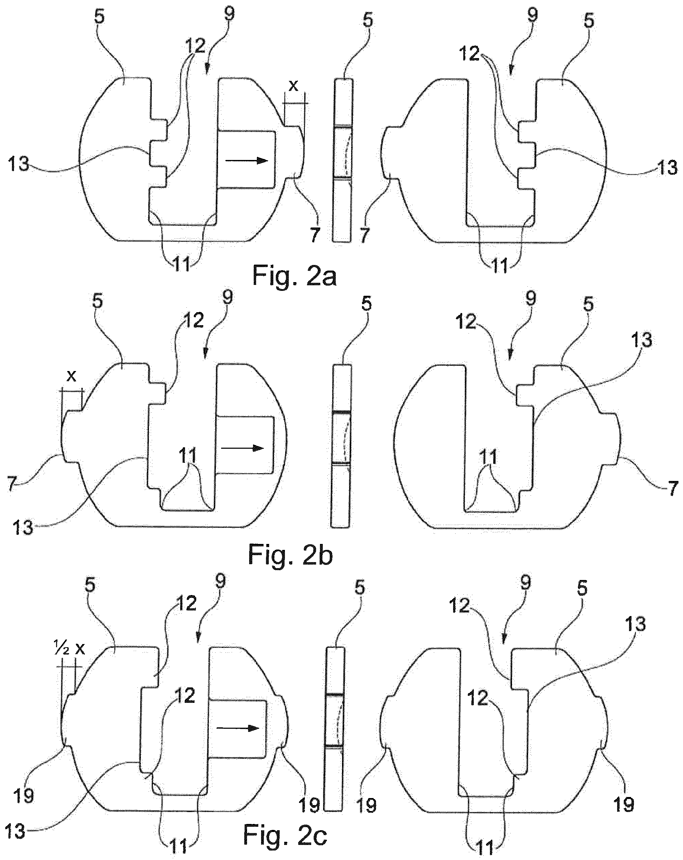

Figs. 2a-2c zeigen drei unterschiedliche Arten von Schließplättchen 5 in Vorderansicht, Seitenansicht und Rückansicht. Sämtliche Schließplättchen 5 haben eine Ausnehmung 9 zur Einführung eines Flachschlüssels 10. Im vorliegenden Ausführungsbeispiel ist die Ausnehmung 9 U-förmig, es sind jedoch auch Ausführungen mit rechteckförmiger Ausnehmung vorgesehen. An den längeren Seitenkanten 11 der Ausnehmung 9 sind Abtastnocken 12 und Abtastnuten 13 in einem Raster angeordnet, die zum Abtasten von Codierungen am Flachschlüssel 10 vorgesehen sind.

Im vorliegenden Ausführungsbeispiel ist der Raster an den Seitenkanten der Ausnehmungen 9 derart ausgeführt, dass sieben unterschiedliche Codierungen an einer Abtastposition abgetastet werden können.

Sämtliche Schließplättchen 5 verfügen weiters über eine Fräsung mit einem Anschlag zur Aufnahme der Spiralfeder 6.

Der Unterschied in den drei in Fig. 2a - 2c dargestellten Schließplättchen 9 besteht in der Position des Vorsprungs 7: Fig. 2a zeigt ein positives Schließplättchen, das in vorgespannter Stellung im Schlitz 4 den Zylinderkern blockiert, indem der Vorsprung 7 in die Ausnehmung 8 des Zylindergehäuses hineinragt. Der Pfeil deutet die Vorspannung des Schließplättchens an. Dieses Schließplättchen muss durch den Flachschlüssel nach links verschoben werden, um den Zylinderkern freizugeben.

Fig. 2b zeigt ein negatives Schließplättchen, das in vorgespannter Stellung im Schlitz 4 den Zylinderkern nicht blockiert, sondern freigibt. Der Pfeil deutet wieder die Vorspannung des Schließplättchens an. Dieses Schließplättchen darf durch den Flachschlüssel nicht aus seiner Ursprungsposition verschoben werden, um den Zylinderkern freizugeben. Ein nicht berechtigter Schlüssel verschiebt jedoch das Schließplättchen 5 nach links, und der Vorsprung 7 ragt in die Ausnehmung 8 des Zylindergehäuses, wodurch der Zylinderkern blockiert.

Fig. 2c zeigt ein neutrales Schließplättchen. Dieses hat auf beiden Seiten seines äußeren Umfangs flache Vorsprünge 19, die eine geringere Erstreckung aufweisen als die Vorsprünge 7 bei den positiven oder negativen Schließplättchen. In vorgespannter Stellung blockiert dieses Schließplättchen den Zylinderkern durch einen der beiden Vorsprünge 7. Bei Einführen eines Flachschlüssels muss es verschoben werden, um den Zylinderkern freizugeben, jedoch nicht um ein gesamtes Rastermaß x wie im Falle des positiven oder negativen Schließplättchens, sondern nur um ein halbes Rastermaß.

Dies wird erreicht, indem am Flachschlüssel flache Fräsungen vorgesehen sind, deren Tiefe derart ist, dass sich die neutralen Schließplättchen nicht um ein ganzes, sondern um ein halbes Rastermaß verschieben.

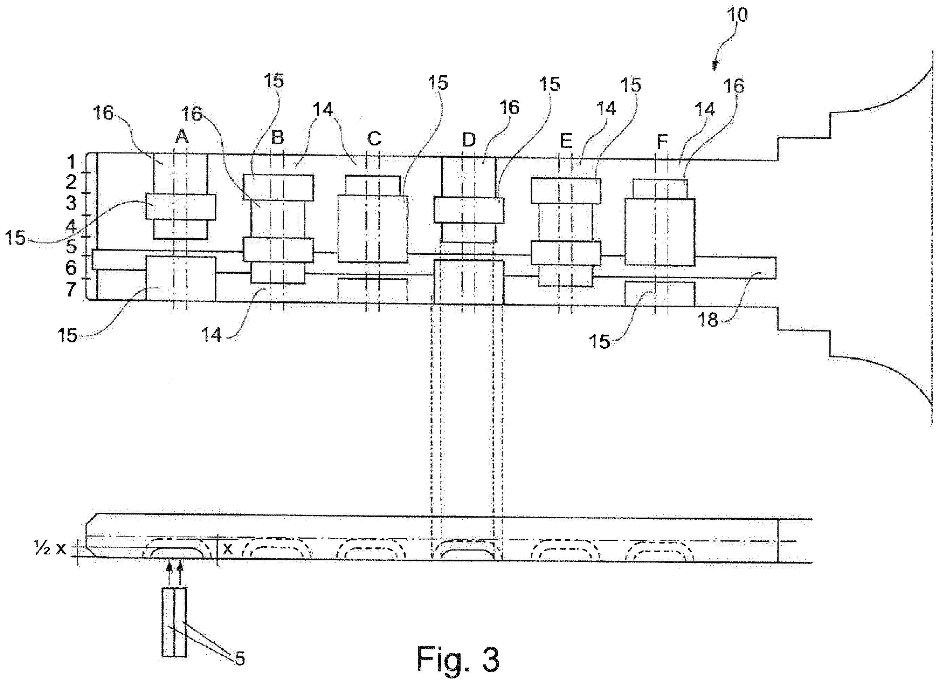

Fig. 3 zeigt einen Flachschlüssel zur Verwendung mit einer Ausführungsform des erfindungsgemäßen Zylinderschlosses in Seitenansicht und Aufsicht. Der Flachschlüssel 10 hat an seiner Flachseite sechs äquidistante Abtastpositionen, die mit den Buchstaben A - F bezeichnet sind. An jeder Abtastposition sind sieben Rasterpositionen 1 - 7 vorgesehen. An jeder Rasterposition befindet sich entweder keine Fräsung 14, eine tiefe Fräsung 15, oder eine flache Fräsung 16. Die Tiefe der Fräsungen ist in der Darstellung des Schlüssels von seiner Stirnseite sichtbar. Diese Rasterpositionen korrespondieren mit den Vorsprüngen 7 der Schließplättchen 5. Die Fräsungen 15, 16 sind derart ausgeführt, dass sie an jeder Abtastposition durch zwei Schließplättchen nebeneinander abgefragt werden können. Zu diesem Zweck sind die Fräsungen an ihrem Grund abgeplattet.

Darüber hinaus ist entlang der Flachseite des Schlüssels eine Steuernut 18 vorgesehen, die in eine entsprechende Steuerrippe 19 des Kerns eingreift. Der Flachschlüssel ist als Wendeschlüssel ausgeführt.

Jede der Abtastpositionen hat eine Grundbreite, die ausreichend ist, um zwei nebeneinander angeordnete Schließplättchen 5 abzufragen. Dadurch kann beispielsweise ein positives Schließplättchen (muss verschoben werden) und ein negatives Schließplättchen (darf nicht verschoben werden) gleichzeitig an einer Position abgefragt werden.

Vorzugsweise wird nur ein Plättchen an einer der Rasterpositionen 1 - 7 abgefragt, das zweite Plättchen im selben Schlitz wird an einer anderen der sieben möglichen Rasterpositionen abgefragt.

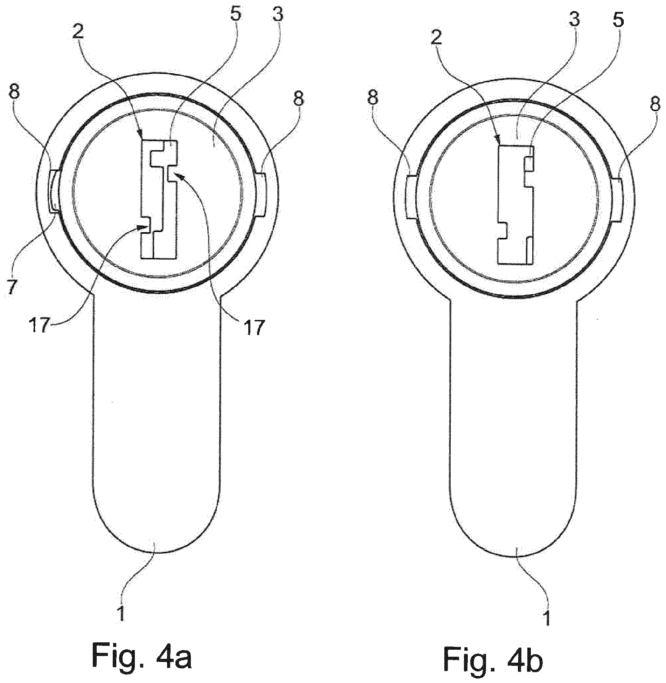

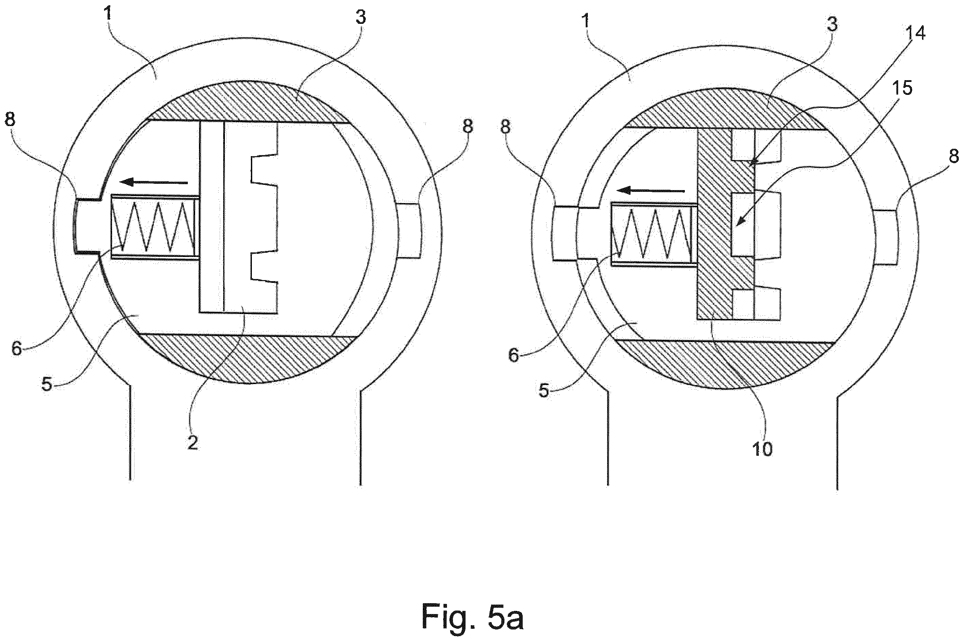

Fig. 4a - 4b zeigt Ansichten einer Ausführungsform des erfindungsgemäßen Zylinderschlosses von vorne. Dieses umfasst ein Zylindergehäuse 1, in dem ein Zylinderkern 3 drehbar angeordnet ist. Die Schließplättchen 5 ragen in Fig. 5a mit ihren Vorsprüngen 7 in den Schlüsselkanal 2. Das Zylindergehäuse 1 hat an seinem inneren Umfang zwei Ausnehmungen 8, in die Vorsprünge 7 der Schließplättchen 5 eingreifen können, um den Zylinderkern 3 gegen Drehung im Zylindergehäuse 1 zu blockieren.

In einer nicht dargestellten Ausführungsform sind die beiden Ausnehmungen 8 leicht versetzt gegenüber, also in einem Winkel zueinander von weniger als 180°, angeordnet.

Fig. 4a zeigt den Zustand, wenn das Zylinderschloss gesperrt ist. In Fig. 4b ist das Schließplättchen 5 durch Einschieben des passenden Schlüssels verschoben, und die Ausnehmungen 8 sind freigegeben.

Fig. 5a zeigt einen Schnitt durch den Zylinderkern an der Position eines positiven Schließplättchens ohne eingeführten Schlüssel (links) und mit eingeführtem Schlüssel (rechts). Ohne eingeführten Schlüssel befindet sich das Schließplättchen 5 in Blockierstellung und wird dort durch die Federkraft der Spiralfeder 6 gehalten. Die Federkraft der Spiralfeder ist durch den Pfeil angedeutet. Der Vorsprung 7 des Schließplättchens 5 ragt in die Ausnehmung 8 des Zylindergehäuses 1 und verhindert eine Drehung des Zylinderkerns 3.

Durch Einführen des Flachschlüssels 10 mit der richtigen Codierung an der betreffenden Abtastposition wird das Schließplättchen 5 an seinen Abtastnocken um eine ganze Rastereinheit x nach rechts verschoben, und die Ausnehmung 8 wird frei. Somit lässt sich der Zylinderkern frei drehen.

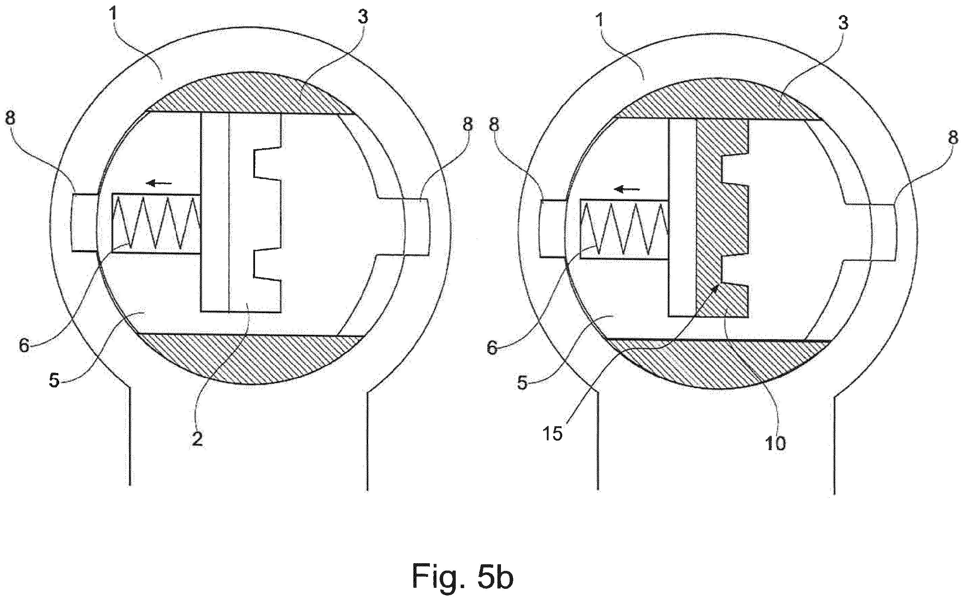

Fig. 5b zeigt einen Schnitt durch den Zylinderkern an der Position eines negativen Schließplättchens ohne eingeführten Schlüssel (links) und mit eingeführtem Schlüssel (rechts). Ohne eingeführten Schlüssel befindet sich das Schließplättchen 5 in Freigabestellung und wird dort durch die Federkraft der Spiralfeder 6 gehalten.

Die Federkraft der Spiralfeder ist durch den Pfeil angedeutet. Der Vorsprung 7 des Schließplättchens 5 ragt nicht in die Ausnehmung 8 des Zylindergehäuses 1 und erlaubt somit eine freie Drehung des Zylinderkerns 3. Durch Einführen des Flachschlüssels 10 mit der richtigen Codierung an der betreffenden Abtastposition wird diese Situation nicht geändert: die Abtastnocken des Schließplättchens 5 greifen in entsprechende Nuten an der Abtastposition des Schlüssels ein, und die Position des Schließplättchens bleibt unverändert. Somit lässt sich der Zylinderkern frei drehen.

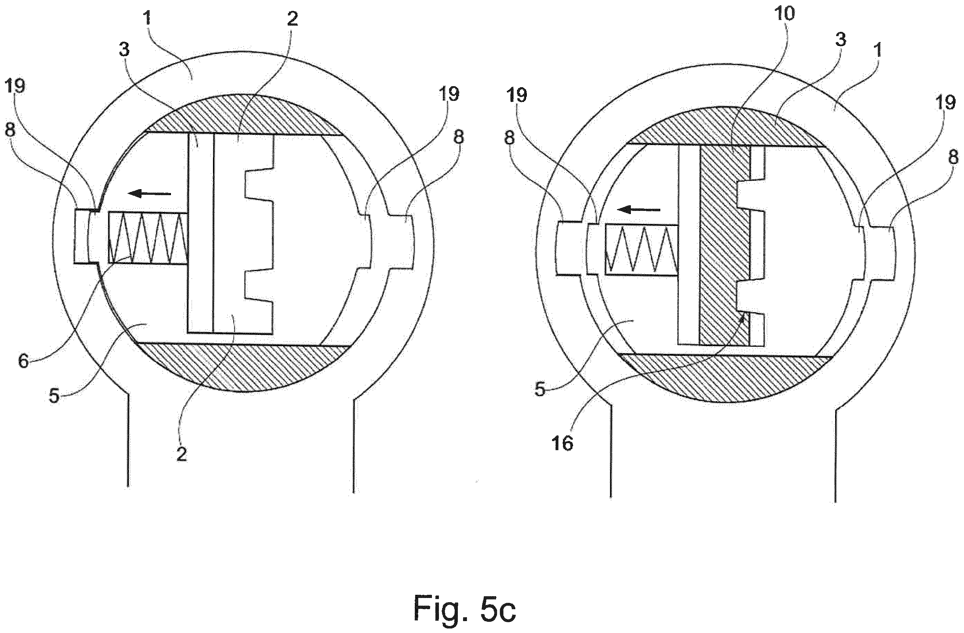

Fig. 5c zeigt einen Schnitt durch den Zylinderkern an der Position eines neutralen Schließplättchens ohne eingeführten Schlüssel (links) und mit eingeführtem berechtigtem Schlüssel (rechts). Ohne eingeführten Schlüssel befindet sich das Schließplättchen 5 in Blockierstellung und wird dort durch die Federkraft der Spiralfeder 6 gehalten. Die Federkraft der Spiralfeder ist durch den Pfeil angedeutet. Der linke Vorsprung 19 des Schließplättchens 5 ragt in die Ausnehmung 8 des Zylindergehäuses 1 und verhindert somit eine freie Drehung des Zylinderkerns 3. Der zweite Vorsprung 19 des Schließplättchens ist jedoch frei.

Durch Einführen des berechtigten Flachschlüssels 10 mit der richtigen Codierung im halben Rastermaß ½ x an der betreffenden Abtastposition verschiebt das Schließplättchen um ein halbes Rastermaß nach rechts. Dadurch wird einerseits die linke Ausnehmung 8 des Zylindergehäuses freigegeben, andererseits dringt der rechte Vorsprung 19 des Schließplättchens gerade nicht in die rechte Ausnehmung des Zylindergehäuses. Somit lässt sich der Zylinderkern frei drehen. Würde an der betreffenden Abtastposition ein volles Rastermaß vorgesehen sein, dann würde der rechte Vorsprung 19 in die rechte Ausnehmung 8 verschoben werden, und das Schließplättchen würde wiederum den Zylinderkern blockieren.

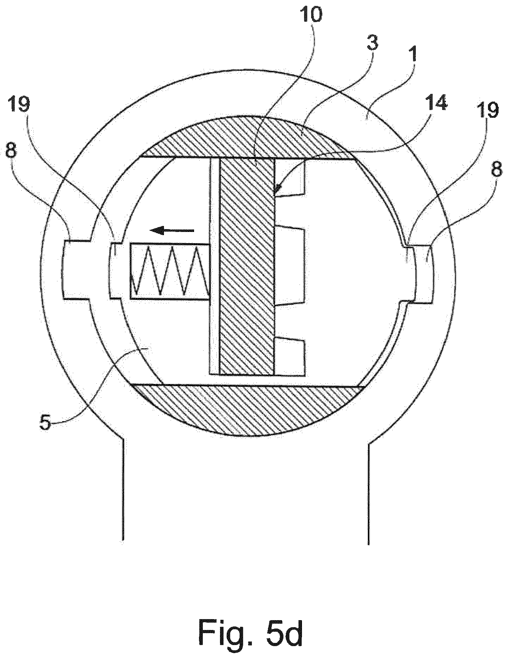

Dieser Fall ist in Fig. 5d gezeigt. Statt der erforderlichen flachen Fräsung ist am Schlüssel keine Fräsung 14 vorgesehen. Dadurch verschiebt sich das Schließplättchen 5 um ein ganzes Rastermaß x nach rechts, und der rechte Vorsprung 19 greift in die Ausnehmung 8 ein. Der Zylinderkern blockiert wiederum.

Die Erfindung beschränkt sich nicht auf das vorliegende Ausführungsbeispiel, sondern umfasst sämtliche Ausführungen im Rahmen der nachfolgenden Patentansprüche.

### Bezugszeichenliste:

- 1: Zylindergehäuse
- 2: Schlüsselkanal
- 3: Zylinderkern
- 4: Schlitz
- 5: Schließplättchen
- 6: Spiralfeder
- 7: Vorsprung
- 8: Ausnehmung
- 9: Ausnehmung
- 10: Flachschlüssel
- 11: Seitenkante
- 12: Abtastnocke
- 13: Abtastnut
- 14: Keine Fräsung
- 15: Tiefe Fräsung
- 16: Flache Fräsung
- 17: Steuerrippe
- 18: Steuernut
- 19: Flacher Vorsprung

## Patentansprüche

1. Zylinderschloss mit einem Zylindergehäuse (1) und einem darin drehbaren, einen Schlüsselkanal (2) aufweisenden Zylinderkern (3), wobei im Zylinderkern (3) Schlitze (4) vorgesehen sind, in denen Schließplättchen (5) verschiebbar angeordnet sind, die jeweils mit einer Spiralfeder (6) vorgespannt sind, wobei die Schließplättchen (5) an ihrem äußeren Umfang jeweils wenigstens einen Vorsprung (7) aufweisen, der mit wenigstens einer Ausnehmung (8) im Zylindergehäuse (1) zusammenwirkt, um den Zylinderkern (3) gegen eine Drehbewegung relativ zum Zylindergehäuse (1) zu blockieren, wobei die Schließplättchen (5) eine Ausnehmung (9) zur Aufnahme eines Flachschlüssels (10) aufweisen, wobei an einer der Seitenkanten (11) der Ausnehmung (9) eine oder mehrere Abtastnocken (12) und/oder Abtastnuten (13) zum Eingriff in Codierungen (14, 15, 16) vorgesehen sind, wobei die Codierungen an Abtastpositionen an einer Seite des Flachschlüssels vorgesehen sind, sodass durch Einschieben des Flachschlüssels in die Ausnehmung (9) die Schließplättchen (5) verschoben werden und den Zylinderkern (3) freigeben, wobei positive Schließplättchen vorgesehen sind, die in vorgespannter Stellung im Schlitz (4) den Zylinderkern (3) blockieren, und bei Verschiebung den Zylinderkern (3) freigeben, **dadurch gekennzeichnet, dass** negative Schließplättchen vorgesehen sind, die in vorgespannter Stellung im Schlitz (4) den Zylinderkern (3) freigeben und bei Verschiebung durch einen nicht berechtigten Schlüssel den Zylinderkern (3) blockieren.

2. Zylinderschloss nach Anspruch 1, **dadurch gekennzeichnet, dass** in jedem Schlitz (4) zumindest zwei unabhängig voneinander gefederte Schließplättchen (5) angeordnet sind.

3. Zylinderschloss nach Anspruch 1 oder 2, **dadurch gekennzeichnet, dass** entlang des Zylinderkerns (3) mehrere, vorzugsweise sechs Schlitze (4) vorgesehen sind, die mit mehreren, vorzugsweise sechs voneinander unabhängigen Abtastpositionen A - F am Flachschlüssel (10) korrespondieren.

4. Zylinderschloss nach einem der Ansprüche 1 bis 3, **dadurch gekennzeichnet, dass** an einer Seitenkante (11) der Schließplättchen (5) an mehreren, vorzugsweise sieben Rasterpositionen Abtastnocken (12) oder Abtastnuten (13) vorgesehen sind, die mit mehreren, vorzugsweise sieben entsprechend angeordneten Codierungen (14, 15, 16) an den Abtastpositionen A - F des Flachschlüssels (10) korrespondieren.

5. Zylinderschloss nach einem der Ansprüche 1 bis 4, **dadurch gekennzeichnet, dass** neutrale Schließplättchen vorgesehen sind, die an ihrem äußeren Umfang zwei im Wesentlichen gegenüberliegende flache Vorsprünge (19) aufweisen, und das Zylindergehäuse zwei korrespondierende, im Wesentlichen gegenüberliegende Ausnehmungen (8) zur Blockierung des Zylinderkerns (3) aufweist.

6. Vorrichtung nach Anspruch 4 oder 5, **dadurch gekennzeichnet, dass** in jedem Schlitz (4) vorzugsweise ein positives und ein negatives Schließplättchen, ein positives und ein neutrales Schließplättchen, oder ein negatives und ein neutrales Schließplättchen vorgesehen sind.

7. Zylinderschloss nach Anspruch 5 oder 6, **dadurch gekennzeichnet, dass** die neutralen Schließplättchen in vorgespannter Stellung den Zylinderkern (3) durch Eingriff eines flachen Vorsprungs (19) in eine erste Ausnehmung (8) blockieren, bei Verschiebung um eine erste Distanz den Zylinderkern (3) freigeben, und bei Verschiebung um eine zweite, größere Distanz durch Eingriff eines zweiten Vorsprungs (19) in eine zweite Ausnehmung (8) wieder blockieren.

8. Zylinderschloss nach einem der Ansprüche 5 bis 7, **dadurch gekennzeichnet, dass** die Ausnehmungen (8) in einem Winkel von weniger als 180° gegeneinander versetzt angeordnet sind, um einen Schlüsselabzug bei 180° Drehung des Kerns zu blockieren.

9. System aus einem Zylinderschloss nach einem der Ansprüche 1 bis 8 und einem Flachschlüssel (10) mit vorzugsweise sechs Abtastpositionen A - F an seinen Seitenflächen, wobei an den Abtastpositionen zum Eingriff in die Abtastnocken (12) und/oder Abtastnuten (13) der Schließplättchen (5) an vorzugsweise sieben Rasterpositionen des Flachschlüssels Codierungen (14, 15, 16) vorgesehen sind.

## Claims

1. A cylinder lock with a cylinder housing (1) and a cylinder core (3), which is rotatable in the cylinder housing and comprises a key channel (2), wherein small closing plates (5), which are respectively prestressed by a coil spring (6), are displaceably arranged in slots (4) provided in the cylinder core (3), wherein the small closing plates (5) respectively comprise on their outer circumference at least one projection (7), which cooperates with at least one recess (8) in the cylinder housing (1) in order to block the cylinder core (3) from rotating relative to the cylinder housing (1), wherein the small closing plates (5) comprise a recess (9) for receiving a flat key (10), wherein one or more sensing studs (12) and/or sensing grooves (13) for engaging with codings (14, 15, 16) are provided on one of the lateral edges (11) of the recess (9), wherein the codings are provided in sensing positions on one side of the flat key such that the small closing plates (5) are displaced and release the cylinder core (3) when the flat key is inserted into the recess (9), and wherein positive small closing plates are provided, which block the cylinder core (3) in the prestressed position in the slot (4) and release the cylinder core (3) when they are displaced, **characterized in that** negative small closing plates are provided, which release the cylinder core (3) in the prestressed position in the slot (4) and block the cylinder core (3) when they are displaced by a non-authorized key.

2. The cylinder lock according to claim 1, **characterized in that** at least two small closing plates (5), which are spring-loaded independently of one another, are arranged in each slot (4).

3. The cylinder lock according to claim 1 or 2, **characterized in that** multiple slots (4), preferably six slots, are provided along the cylinder core (3), wherein said slots correspond to multiple independent sensing positions, preferably six independent sensing positions A-F, on the flat key (10).

4. The cylinder lock according to one of claims 1-3, **characterized in that** sensing studs (12) or sensing grooves (13) are provided on one lateral edge (11) of the small closing plates (5) in multiple grid positions, preferably seven grid positions, wherein said sensing studs or sensing grooves correspond to multiple codings, preferably seven correspondingly arranged codings (14, 15, 16), in the sensing positions A-F of the flat key (10).

5. The cylinder lock according to one of claims 1-4, **characterized in that** neutral small closing plates are provided, which on their outer circumference comprise two essentially opposite flat projections (19), and **in that** the cylinder housing comprises two corresponding, essentially opposite recesses (8) for blocking the cylinder core (3).

6. The cylinder lock according to claim 4 or 5, **characterized in that** a positive and a negative small closing plate, a positive and a neutral small closing plate or a negative and a neutral small closing plate are preferably provided in each slot (4).

7. The cylinder lock according to claim 5 or 6, **characterized in that** the neutral small closing plates block the cylinder core (3) in the prestressed position due to the engagement of one flat projection (19) into a first recess (8), wherein said neutral small closing plates release the cylinder core (3) when they are displaced by a first distance and once again block the cylinder core when they are displaced by a second, greater distance due to the engagement of a second projection (19) into a second recess (8).

8. The cylinder lock according to one of claims 5-7, **characterized in that** the recesses (8) are arranged offset relative to one another by an angle of less than 180° in order to block a key removal when the core is rotated by 180°.

9. A system consisting of a cylinder lock according to one of claims 1-8 and a flat key (10) with preferably six sensing positions A-F on its lateral surfaces, wherein codings (14, 15, 16) for engaging with sensing studs (12) and/or sensing grooves (13) of the small closing plates (5) in the sensing positions are provided in preferably seven grid positions of the flat key.

## Revendications

1. Serrure à cylindre avec un boîtier de cylindre (1) et un noyau de cylindre (3) apte à tourner dans celui-ci et présentant un canal de clé (2), dans laquelle des fentes (4) sont prévues dans le noyau de cylindre (3), dans lesquelles des plaquettes de fermeture (5) précontraintes respectivement par un ressort hélicoïdal (6) sont disposées de façon déplaçable, dans laquelle les plaquettes de fermeture (5) présentent respectivement au moins une saillie (7) sur leur pourtour extérieur, celle-ci coopérant avec au moins une cavité (8) dans le boîtier de cylindre (1) pour bloquer le noyau de cylindre (3) contre un mouvement de rotation par rapport au boîtier de cylindre (1), dans laquelle les plaquettes de fermeture (5) présentent une cavité (9) destinée à recevoir une clé plate (10), dans laquelle un ou plusieurs ergots de détection (12) et/ou nervures de détection (13) situés sur l'un des bords latéraux (11) de la cavité (9) sont destinés à s'engager dans des codages (14, 15, 16), dans laquelle les codages sont prévus à des positions de détection sur un côté de la clé plate, de telle façon que l'insertion de la clé plate dans la cavité (9) déplace les plaquettes de fermeture (5) et libère le noyau de cylindre (3), dans laquelle il est prévu des plaquettes de fermeture positives bloquant le noyau de cylindre (3) dans une position de précontrainte dans la fente (4), et libérant le noyau de cylindre (3) lors d'un déplacement, **caractérisée en ce qu'**il est prévu des plaquettes de fermeture négatives libérant le noyau de cylindre (3) dans une position de précontrainte dans la fente (4) et bloquant le noyau de cylindre (3) lors d'un déplacement par une clé non autorisée.

2. Serrure à cylindre selon la revendication 1, **caractérisée en ce qu'**au moins deux plaquettes de fermeture (5) suspendues indépendamment l'une de l'autre sont disposées dans chaque fente (4).

3. Serrure à cylindre selon la revendication 1 ou 2, **caractérisée en ce que** plusieurs fentes (4), de préférence six, sont prévues le long du noyau de cylindre (3), lesquelles correspondent à plusieurs et de préférence six positions de détection A - F indépendantes les unes des autres sur la clé plate (10) .

4. Serrure à cylindre selon l'une des revendications 1 à 3, **caractérisée en ce que** sur un bord latéral (11) des plaquettes de fermeture (5), en plusieurs positions d'encliquetage, de préférence au nombre de sept, sont prévus des ergots de détection (12) ou des rainures de détection (13) correspondant à plusieurs codages (14, 15, 16) disposés de façon correspondante, de préférence au nombre de sept, au niveau des positions de détection A - F de la clé plate (10).

5. Serrure à cylindre selon l'une des revendications 1 à 4, **caractérisée en ce qu'**il est prévu des plaquettes de fermeture neutres présentant deux saillies plates (19) essentiellement opposées sur leur pourtour extérieur, et **en ce que** le boîtier de cylindre présente deux cavités (8) essentiellement opposées pour le blocage du noyau de cylindre (3).

6. Dispositif selon la revendication 4 ou 5, **caractérisé en ce que** dans chaque fente (4), il est prévu de préférence une plaquette de fermeture positive et une négative, une plaquette de fermeture positive et une neutre, ou une plaquette de fermeture négative et une neutre.

7. Serrure à cylindre selon la revendication 5 ou 6, **caractérisée en ce que** les plaquettes de fermeture neutres bloquent le noyau de cylindre (3) dans une position de précontrainte par engagement d'une saillie plate (19) dans une première cavité (8), libèrent le noyau de cylindre (3) lors d'un déplacement sur une première distance, et le bloquent de nouveau par engagement d'une deuxième saillie (19) dans une deuxième cavité (8) lors d'un déplacement sur une deuxième distance plus grande.

8. Serrure à cylindre selon l'une des revendications 5 à 7, **caractérisée en ce que** les cavités (8) sont disposées de façon à être décalées d'un angle inférieur à 180° les unes par rapport aux autres, afin de bloquer un retrait de clé lors d'une rotation de 180° du noyau.

9. Système constitué d'une serrure à cylindre selon l'une des revendications 1 à 8 et d'une clé plate (10) présentant de préférence six position de détection A - F sur ses surfaces latérales, dans lequel des codages (14, 15, 16) sont prévus au niveau des positions de détection, de préférence en sept positions d'encliquetage de la clé plate, pour l'engagement dans les ergots de détection (12) et/ou les rainures de détection (13) des plaquettes de fermeture (5).
